# EUROPEAN PATENT APPLICATION

(11) **EP 3 733 032 A1**
(43) Date of publication of application: **04.11.2020**
(21) Application number: 19171579.6
(22) Date of filing: 29.04.2019
(51) Int. Cl.: A47J 31/60

(54) **AUTOMATIC COFFEE MACHINE**

(71) Applicant: BSH Hausgeräte GmbH, 81739 München (DE)
(72) Inventor: Jäger, Harald, 83349 Palling (DE); Mathes, Anton, 83364 Neukirchen am Teisenberg (DE); Beck, Rudolf, 84518 Garching a. d. Alz (DE)

(57) **Abstract**

An automatic coffee machine (10) for preparation of beverages comprising a pump, a brewing system with a brewing chamber (18), a set of valves, an external controller (17) for the valves control, a steam generator (19), a cleaning system and a coffee line (14) with a coffee spout (16), characterized in that a blow of the steam produced by the steam generator (19) is set to the coffee line (14) and the coffee spout (16) in order to clean and preheat the coffee line (14) and the coffee spout (16) or to the brewing chamber (18), the coffee line (14) and the coffee spout (16) in order to clean and preheat the brewing chamber (18), the coffee line (14) and the coffee spout (16).

The present invention provides an automatic and efficient system for cleaning and preheating the elements of the coffee machine. The cleaning and preheating system of the coffee machine influences the quality of the beverage which leads to increased consumer satisfaction.

## Description

### Background of the invention

The present invention relates to an automatic coffee machine for preparation of beverages comprising a pump, a brewing system with a brewing chamber, a set of valves, an external controller for the valves control, a steam generator, a cleaning system and a coffee line with a coffee spout.

### State of the art

The patent application CA 2 181 228 A1 shows an automatic beverage brewing apparatus including a brew chamber assembly with a throat in a top portion, a drain in a bottom portion, and a filter positioned therebetween. A movable piston controllably opens and closes the throat and drain during brewing and flushing cycles. A discharge line from the brew chamber has a controllable discharge valve to direct flow from the brew chamber through a dispensing line, a waste line, or to prevent flow through either line. Water may be controllably accumulated in the brew chamber by controlling the discharge valve to prevent flow through either line. At the initiation of the brewing cycle the valve is operated to block the dispensing line and the waste line, whereupon a brewing substance and brewing water are introduced into the brew chamber. The brewing substance floats on and steeps in the brewing water which is accumulated in the brew chamber. A pressurized water line dispenses water into the throat to rinse the throat. After the brewing cycle is complete, a flushing cycle begins to thoroughly flush the spent brewing substance from the brew chamber. The discharge valve blocks the discharge line to retain water in the brew chamber to float the spent brewing substance off of the filter. Upon floating the brewing substance, the drain is opened to remove the float water and substance.

The patent application WO 2013/ 012 882 A1 discloses the beverage appliance which includes a venturi having a steam inlet and a milk inlet. The steam inlet and milk inlet each include a solenoid valve configurable between an open state and a closed state. The solenoid valves are electrically coupled to a processor and are controllable through first and second switches. In operation, upon activation of the first switch, the solenoid valves are controlled to their open states to deliver milk and steam to the venturi to produce frothed milk. When a desired amount of frothed milk has been dispensed, the user deactivates the first switch and the processor controls only the milk inlet solenoid valve to its closed state. The steam inlet solenoid valve remains in its open state for a predetermined amount of time such that a burst of steam only is forced through the venturi and distribution lines to purge them of milk.

The patent application EP 2 612 577 A1 discloses the method for preparing a hot beverage, particularly coffee and the brewing device which comprises a brewing unit and two hot water sources. The brewing water supplying devices are provided for supplying hot water from the former hot water source to the brewing unit, where a hot water mixing device is also provided. A control element is provided for driving a hot water mixing device. The control element is adapted for the admixing of a portion of hot water of the latter hot water source.

Presented solutions do not provide an automatic, easy, quick and efficient system of cleaning and preheating a coffee machine. The cleaning process is performed only when the device is activated or deactivated.

### The aim of the invention

It is the object of the present invention to provide a further development with an advantage over the state of the art and provide an automatic coffee machine with an efficient, automatic cleaning and preheating system.

### Summary of the invention

The object is solved by an automatic coffee machine whereby a blow of the steam produced by the steam generator is set to the coffee line and the coffee spout in order to clean and preheat the coffee line and the coffee spout or to the brewing chamber, the coffee line and the coffee spout in order to clean and preheat the brewing chamber, the coffee line and the coffee spout.

An automatic coffee machine is a device designed for performing a brewing process without a great participation of the user. Most of the processes of the automatic coffee machines are performed automatically e.g. brewing process, drainage process or cleaning process. The cleaning process can be performed using water or steam. The advantage of using steam in order to perform the cleaning process is that the water consumption of the coffee machine is decreased. The steam is generated by the steam generator and is set to the coffee line and the coffee spout in order to clean the coffee line and the coffee spout. The positive effect is that no residuals of the coffee stay inside the coffee line or the coffee spout so the beverage quality is better. The other advantage of setting the blow of the steam through the coffee line and the spout is that the coffee line is preheated which has a direct influence on the coffee temperature which positively affects the beverage quality.

Preferably, the blow of the steam produced by the steam generator is set also to the brewing chamber and next to the coffee line and the coffee spout in order to clean and preheat the brewing chamber, the coffee line and the coffee spout. After the brewing process, a single blow of the steam is generated and enters the brewing chamber in order to clean and preheat it. The positive effect is that not only the coffee line and the coffee spout are cleaned and preheated but also the brewing chamber. Cleaning and preheating process influences positively the quality of the beverage as the brewing chamber do not cools down between two consecutive beverages which has direct influence on the coffee high temperature which is desirable.

Thanks to the fact that the steam is used instead of water, the water consumption is lower so in consequence the drip tray can be emptied not so often and water tank can be refilled not so frequently.

In the preferred embodiment of the invention the blow of the steam is sent through the brewing chamber, the coffee line and the coffee spout periodically, especially between two consecutive cups of coffee. The blow of the steam is released automatically before and/or after the brewing process. The positive effect is that the coffee residues do not dry out inside the brewing chamber or coffee line and can be easily removed by the blow of the steam generated before or after each brewing process. The positive effect is that the water consumption in comparison to the cleaning process which uses the fresh water is greatly decreased. Furthermore, the water tank can be refilled less frequently and removing the waste water from the drip tray can be performed not so often. Additionally, when the system is cleaned constantly there is no need to use special cleaning program with chemicals in order to clean the coffee machine effectively.

In another embodiment of the invention a crema valve is controlled by the external controller for releasing the steam which passes through the crema valve to the brewing chamber and next to the coffee line and the coffee spout. The crema valve is a simple valve which is responsible for preventing the steam and the liquid from going back to the brewing chamber. The crema valve is placed between the brewing chamber and the coffee line. The crema valve is controlled by the external controller as the steam pressure is not sufficient to open the crema valve. The positive effect of controlling the crema valve by the external controller is that the crema valve opens at specific time which is defined. There is no possibility that the crema valve opens unintentionally. The steam flows from the brewing chamber via the coffee line to the coffee spout to finally get outside the coffee machine.

In the preferred embodiment of the invention the coffee machine is a programmable device which is adapted to allow the user to set up the frequency and the duration of the cleaning an preheating cycles. The coffee machine is equipped with many automatic functions, nevertheless the basic settings of this functions or processes can be set up by the consumer. The positive effect is that the customer can change the settings and adjust the process to his needs.

In a favorable embodiment of the invention the steam from the steam generator passes through a steam inlet valve to the brewing chamber. The steam is generated in the steam generator which is placed in the vicinity of the brewing chamber. The steam passes through the steam inlet valve directly to the brewing chamber in order to clean and preheat the brewing chamber. The positive effect is better quality of the beverage.

In another embodiment of the invention the steam from the steam generator passes through a check valve to the coffee line and the coffee spout. In case the cleaning and preheating system concerns only the coffee line the steam generator is placed in the vicinity of the coffee line and the steam reaches the coffee line after going through a check valve to the coffee line and the coffee spout. The check valve is provided to prevent the steam from going back the steam line. The steam blow opens the check valve which next automatically closes. The steam line is a path from the steam generator to the coffee spout. The positive effect is that the cleaning and preheating system construction is very simple and can use existing modules of the coffee machine.

The present invention provides an automatic and efficient system for cleaning and preheating the elements of the coffee machine. The cleaning and preheating system of the coffee machine influences the quality of the beverage which leads to increased consumer satisfaction.

### Brief description of the figures

Further details of embodiments of the invention together with additional objects and corresponding advantages will be best understood from the following description of specific embodiments and in connection with the accompanying drawings.

In the drawing:
Fig. 1 shows a schematic view of the coffee machine with the coffee line,
Fig. 2 shows a schematic view of the coffee machine with the steam line,
Fig. 3 shows a schematic view of the coffee machine in the second embodiment of the invention.

### Detailed description of the invention

With reference to the attached drawing, the technical contents and detailed description of the present invention are described thereinafter according to a preferable embodiment being not used to limit its executing scope. Any equivalent variation and modification made according to the appended claims is also covered by the claims claimed by the present invention.

In the following description of the preferred embodiment of the present invention, similar identical reference numbers designate identical or comparable components.

The automatic coffee machine is a device designed for preparing beverages and comprises a pump, a brewing system with a brewing chamber, a set of valves, an external controller for the valves control, a steam generator, a cleaning system and a coffee line with a coffee spout. The automatic coffee machine performs the brewing process and accompanying processes automatically without much attention of the user. The user can activate some of the processes e.g. start the brewing process but some of them are activated automatically e.g. the cleaning process.

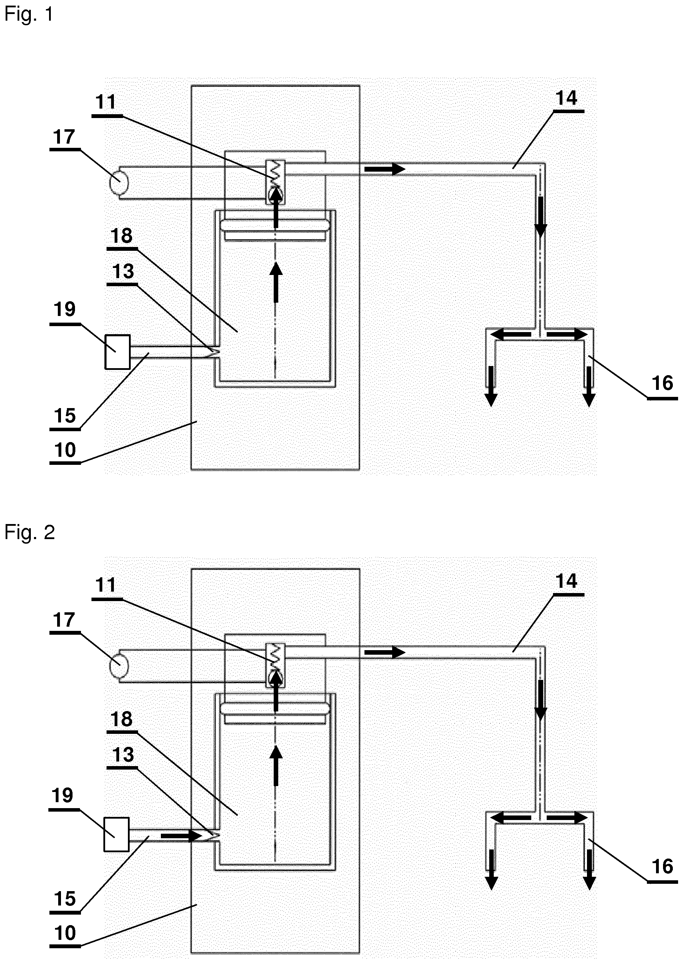

Fig. 1 shows a schematic view of the coffee machine 10 cleaning system with the coffee line 14. The coffee line 14 is indicated by arrows. The coffee flows from the brewing chamber 18 where is brewed, through the crema valve 11 to the coffee line 14 and to the coffee spout 16 to finally reach the cup. During the brewing process, after reaching a defined brewing pressure, the crema valve 11 opens and the coffee can flow in the direction of the coffee spout 16. The crema valve 11 prevents the coffee from returning from the coffee line 14 to the brewing chamber 18. During the brewing process the steam inlet valve 13 is closed.

Fig. 2 shows a schematic view of the coffee machine 10 cleaning system with the steam line. The steam generator 19 is placed in the vicinity of the brewing chamber 18. The cleaning process is activated automatically after the brewing process or just before the brewing process. The cleaning process starts with the steam blow generation in the steam generator 19. Next, the steam enters the brewing chamber 18 through the steam inlet valve 13. From the brewing chamber 18 the steam goes through the crema valve 11 to the coffee line 14 and the coffee spout 16 in order to wash the coffee residues and to preheat the brewing chamber 18 and the coffee line 14. For the cleaning process purpose the crema valve 11 is controlled by the external controller 17 which opens and closes the crema valve 11 in a predetermined points of time in order to make the steam possible to reach the coffee line 14 and the coffee spout 16.

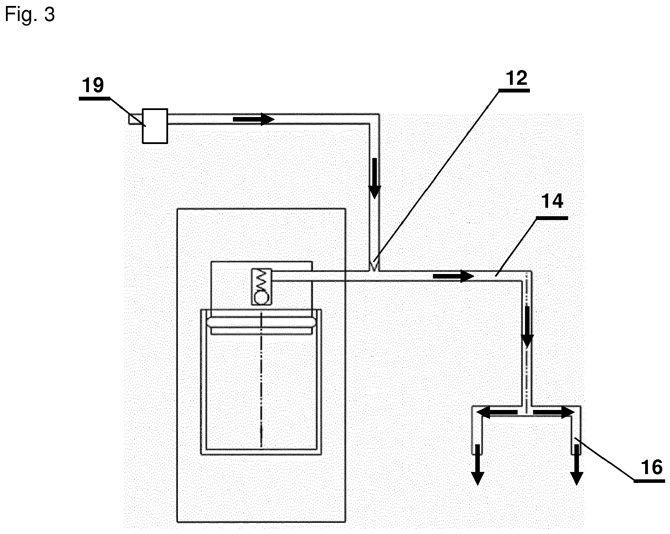

Fig. 3 shows a schematic view of the coffee machine 10 in the second embodiment of the invention. During the coffee brewing process, after reaching a defined brewing pressure, the crema valve 11 opens and the coffee flows from the brewing chamber 18 through the crema valve 11 in the direction of the coffee spout 16. The steam generator 19 is placed in the vicinity of the coffee line 14 in order to clean and preheat the coffee line 14 and the coffee spout 16. During the steam generation by the steam generator 19, the check valve 12 is closed and prevents the coffee from flowing into the steam line. The steam pressure opens the check valve 12 and the cleaning and preheating process of the coffee line 14 and the coffee spout 16 is performed.

The present invention provides an automatic and efficient system for cleaning and preheating the elements of the coffee machine. The cleaning and preheating system of the coffee machine influences the quality of the beverage which leads to increased consumer satisfaction.

### LIST OF REFERENCE SIGNS

- 10: coffee machine
- 11: crema valve
- 12: check valve
- 13: steam inlet valve
- 14: coffee line
- 16: coffee spout
- 17: external controller
- 18: brewing chamber
- 19: steam generator

## Claims

1. An automatic coffee machine (10) for preparation of beverages comprising a pump, a brewing system with a brewing chamber (18), a set of valves, an external controller (17) for the valves control, a steam generator (19), a cleaning system and a coffee line (14) with a coffee spout (16), **characterized in that** a blow of the steam produced by the steam generator (19) is set to the coffee line (14) and the coffee spout (16) in order to clean and preheat the coffee line (14) and the coffee spout (16) or to the brewing chamber (18), the coffee line (14) and the coffee spout (16) in order to clean and preheat the brewing chamber (18), the coffee line (14) and the coffee spout (16).

2. The automatic coffee machine (10) according to claim 1, **characterized in that** the blow of the steam is sent through the brewing chamber (18), the coffee line (14) and the coffee spout (16) periodically, especially between two consecutive cups of coffee.

3. The automatic coffee machine (10) according to any of the preceding claims, **characterized in that** the blow of the steam is released automatically before and/or after the brewing process.

4. The automatic coffee machine (10) according to any of the preceding claims, **characterized in that** a crema valve (11) is controlled by the external controller (17) for releasing the steam which passes through the crema valve (11) to the brewing chamber (18), the coffee line (14) and the coffee spout (16).

5. The automatic coffee machine (10) according to any of the preceding claims, **characterized in that** the coffee machine (10) is a programmable device which is adapted to allow the user to set up the frequency and the duration of the cleaning and preheating cycles.

6. The automatic coffee machine (10) according to any of the preceding claims, **characterized in that** the steam from the steam generator (19) passes through a steam inlet valve (13) to the brewing chamber (18).

7. The automatic coffee machine (10) according to claim 1 to 5, **characterized in that** the steam from the steam generator (19) passes through a check valve (12) to the coffee line (14) and the coffee spout (16).
